Europäisches Patentamt

European Patent Office

Office européen des brevets

(11) Publication number: **0 357 932**
**A1**

## EUROPEAN PATENT APPLICATION

(21) Application number: **89113798.6**

(22) Date of filing: **26.07.89**

(51) Int. Cl.5: **H04N 5/217 , H04N 5/335**

The title of the invention has been amended (Guidelines for Examination in the EPO, A-III, 7.3).

(30) Priority: **27.07.88 JP 188728/88**

(43) Date of publication of application:
**14.03.90 Bulletin 90/11**

(84) Designated Contracting States:
**DE FR GB**

(71) Applicant: **NEC CORPORATION**
**33-1, Shiba 5-chome**
**Minato-ku Tokyo(JP)**

(72) Inventor: **Iijima, Takashi**
**c/o Nec Corporation 33-1, Shiba 5-chome**
**Minato-ku Tokyo(JP)**

(74) Representative: **Glawe, Delfs, Moll & Partner**
**Patentanwälte**
**Postfach 26 01 62 Liebherrstrasse 20**
**D-8000 München 26(DE)**

(54) **Driving method for a solid-state imaging device for improving smear phenomenon.**

(57) A driving method of solid-state imaging device having vertical overflowed drain structure in which a pulse depening the reverse bias of the PN junction formed in the substrate for forming the vertical overflow drain structure is applied to the substrate in a period, at least, when a signal charge is transferred from a vertical CCD shift register, thereby effectively preventing the smear phenomenon.

EP 0 357 932 A1

# DRIVING METHOD OF SOLID-STATE IMAGING DEVICE FOR IMPROVING SMEAR PHENOMENON

## BACKGROUND OF THE INVENTION

Field of the Invention:

The present invention relates to a driving method of a CCD imaging device of a frame interline transfer type (hereinafter called an FIT type), and especially to a driving method of a solid-state imaging device for reducing the occurrence of a smear.

Description of the Related Art:

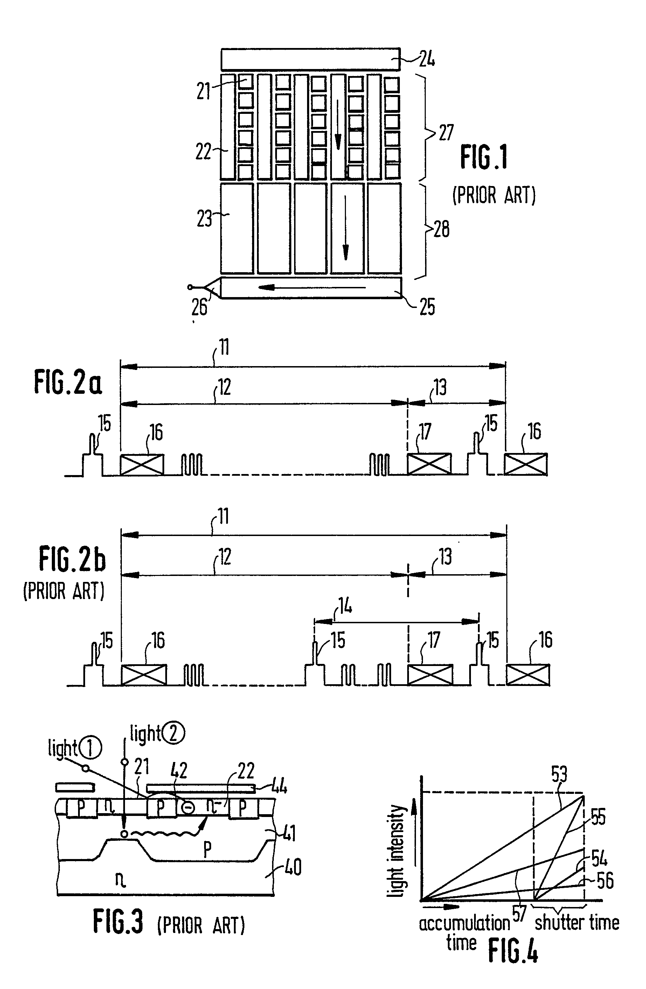

Considerable improvement has been made with regard to a smear phenomenon which is a fault peculiar to the solid-state imaging device. Such improvement is remarkable in a so-called FIT-type CCD imaging device which is shown in Figure 1 and which has an imaging area 27 having a plurality of columns of photo-diodes 21 and a plurality of vertical CCD shift register 22 each of which is placed in adjacent to each column of photo-diodes 21, a charge storage area 28 consisted of a plurality of CCD charge transfer stages, a horizontal CCD shift register 25 shifting to an output portion 26 charges transferred from the respective photo-diodes 21 through the vertical CCD shift register 22 and the charge storage area 28 and a charge drain portion 24. In such an FIT-type CCD imaging device having a vertical overflow drain, a smear occurring in an interline (IL) type CCD imaging device is reduced by increasing a transfer frequency of frame transfer (FT) to reduce the smear to such a level as enabling the use of the imaging device for a broadcasting camera, although the use of the FIT-type device is accompanied by an enlarged chip area.

This FIT-type CCD imaging device enables the application of an electronic shutter mode. A conventional driving method will be described in regard to a normal mode and the shutter mode by using Figure 1 and Figures 2(a) and 2(b). In the normal mode, the solid-state imaging device shown in Fig. 1 is driven at a timing shown in Fig. 2(a). Concretely, photoelectric conversion is made in a photo-diode 21 within a signal output period 12 in a one field period 11, and a signal charge accumulated therein is read out to a vertical CCD shift register (hereinafter called V-CCD) 22 of an imaging area 27 by a read-out pulse 15. This charge is transferred subsequently to V-CCD 23 of the charge storage area 28 by a high-speed normal transfer pulse 16 and read out of a chip thereafter through a horizontal CCD shift register (hereinafter called H-CCD) 25 and an output portion 26. In the shutter mode, the signal charge in the photo-diode 21 is read out to V-CCD 22 by the read-out pulse 15 before a shutter accumulation period 14 is started, and this charge is swept out to the drain portion 24 by a high-speed sweep pulse 17 within a blanking period 13. Meanwhile, the photodiode 21 starts to accumulate the signal charge again with commencement of the shutter period, and the charge thus accumulated is read out of the chip by the same operation as in the normal mode. Since the time of commencement of the shutter accumulation period 14 can be set arbitrarily in the shutter mode, a period wherein the photo-diode 21 accumulates the signal charge can be selected arbitrarily. According to this system, accordingly, it is possible to control the amount of exposure and to prevent the blurring of an image of a subject moving at high speed.

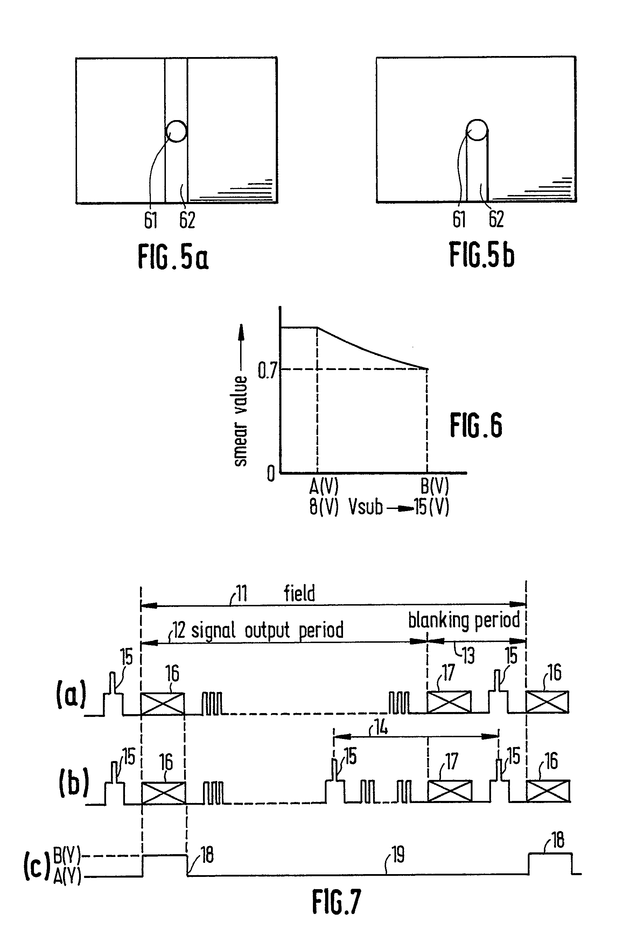

The prior-art FIT-type CCD imaging device has a fault that conspicuous deterioration in the smear is found at the time of shuttering, though the smear at the time of an ordinary photosensing operation is reduced sufficiently. The reason of this deterioration will be described with reference to Figures 3 and 4. The imaging device has a vertical overflow structure which the imaging area 27, the storage area 28, the H-CCD 25 and the drain portion 24 are formed in a P-well region 41 formed at surface portion of an N-type substrate 40, as shown in Figure 3. The occurrence of the smear is caused by that a light ① falling obliquely on a photo-diode 21 is reflected on the surface thereof and further reflected on a photo-shield 44 and enters V-CCD 22 of the imaging area 27 (see Figure 1), or by that a charge generated in the depth of the photodiode 21 when a light ② falls thereon is diffused into V-CCD 22 beyond a transfer gate 42, as shown in Figure 3. The quantities of the lights ① and ② increase when a subject to be sensed is of high luminance. In the FIT-type CCD imaging device, the smear is caused by charges leaking in at the time of high-speed sweeping transfer and high-speed normal transfer and in a period between these transfers, and the length of this period is the same both in the normal mode and in the shutter mode. Accordingly, the smear in the shutter mode is deteriorated in comparison with that in the normal mode as shown in Fig. 4. When a signal amount in the shutter mode increases as indicated by 55 while a signal amount in the normal mode increases as indicated by 53, in this figure, a smear in the shutter mode, denoted by 57, is equal to the one in the normal mode in terms of the time of accumulation thereof and is higher than the one in the latter mode in terms of the amount thereof for a unit time, and therefore the smear becomes larger than that in the normal mode, denoted by 56. In the case when a subject 61 of high luminance is present in the shutter mode, as shown in Figure 5(a), a smear 62 occurs consequently above and below the subject 61. At the time of sweeping out, when the smear is swept out to a drain 24 (see Figure 1) by a high-speed sweep pulse, in addition, a part of the smear caused by the subject 61 of high luminance is not swept out and remains in V-CCD 22. The part of V-CCD 22 wherein this smear is held receives the smear due to the subject 61 of high luminance once again on the occasion of high-speed transfer. Therefore, the smear tends to occur in the lower-side image of the subject of high luminance, and even when it does not occur both above and below the subject 61, it happens to occur only in the lower part of the subject 61 of high luminance, as shown in Figure 5(b).

## SUMMARY OF THE INVENTION

The object of the present invention is to present a driving method of a solid-state imaging device which presents the occurrence of the smear phenomenon without accompanying other undesirable phenomenon such as a blur in a reproduced picture of moving subject.

The other object of the present invention is to present a driving method of a solid-state imaging device for reducing the occurrence of the smear phenomenon which is effective for any type of solid-state imaging device having a vertical overflow drain structure.

According to the present invention, there is provided a driving method of a solid-state imaging device having a vertical overflow drain structure in which a pulse deepening the reverse bias of the PN junction formed in the substrate for forming the vertical overflow drain structure is applied to the substrate in a period, at least, when a signal charge is transferred from a vertical CCD shift register. Especially, in driving the frame interlace transfer (FIT)-type CCD imaging device, the pulse deepening the reverse bias is applied in a period, at least, when the signal charge is transferred from the imaging area to the charge storage area through the vertical CCD shift registers in both areas.

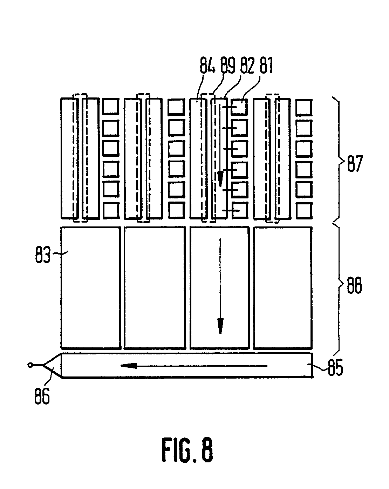

The present invention prevents the smear phenomenon is effectively prevented from occurring as follows. Charges generated by the incident light ② (see Figure 3) under the photo-diodes can be absorbed by widening a depletion layer between the n-type substrate and the p-type vertical overflow drain layer. In practice, the smear is reduced to 70% by increasing the potential of the substrate from 8 V to 15 V, as shown in Figure 7.

## BRIEF DESCRIPTION OF THE DRAWINGS

The above and other objects, features and advantages of the present invention will become more apparent from the following description of the preferred embodiments taken in conjunction with the accompanying drawings, wherein:

Figure 1 is a plan view of an FIT-type CCD imaging device for explaining the prior art and the first preferred embodiment of the present invention;

Figures 2(a) and 2(b) are timing charts of driving pulse for explaining a prior driving method of CCD imaging device;

Figure 3 is a sectional diagram of a CCD imaging device having a vertical overflow drain structure which is useful for explaining the prior art and the embodiments of the present invention;

Figure 4 is a graph showing values of signal charge and smear charge which is useful for explaining the prior art and the embodiments of the present invention;

Figures 5(a) and 5(b) are drawings of reproduced picture affected from the smear phenomenon;

Figure 6 is a graph showing a relationship between the value of smear charge and the substrate bias;

Figures 7(a) to 7(c) are timing charts of driving pulses and a substrate bias voltage for explaining the first preferred embodiment of the present invention; and

Figure 8 is a plan view of a CCD imaging device used in a second preferred embodiment of the present invention.

## DETAILED DESCRIPTION OF THE PREFERRED EMBODIMENTS

In the next, a description will be made on the preferred embodiments of the present invention with reference to the drawings.

An imaging device employed in a first preferred embodiment of the present invention is shown in Figures 1 and 3. Figures 7(a) and 7(b) are timing charts of drive pulses used in the first embodiment, and Figure 7(c) shows a substrate bias potential on the occasion. Figure 7(a) shows a drive pulse in the normal mode, and Figure 7(a) is a vertical transfer pulse in the high-speed shutter mode having a shutter accumulation time 14. The description on these cases is omitted, since they are identical with those in the prior-art example shown in Figures 2(a) and 2(b). In the FIT structure having a substrate 40 held at 8 volts, the leak-in charge in the period of a high-speed normal transfer pulse 16 turns to be the smear, and therefore it is necessary to suppress the smear occurring in this period. Accordingly, a pulse 18 of 15 volts is impressed on the substrate 40 as shown in Figure 1(c), in the period of the high-speed normal transfer pulse 16, to widen the depletion layer between the P-well layer 41 and the N-type substrate 40, and thereby the charge generated in the P-well layer 41 under the photo-diode 21 is drawn into the substrate 40, so as to suppress the occurrence of the smear. As a result, the smear on the reproduced picture is improved with 30%.

A device as shown in Figure 8, wherein an overflow portion 84 is provided on the lateral side of V-CCD 82 of the imaging device in addition to the vertical overflow drain structure, will be described as a second embodiment of the present invention. In this drawing, numerals having lower figures common to the ones of Figure 1 denote parts equivalent to the ones of Figure 1. The smear generated in the high speed normal transfer period can be swept out regularly by this drain part 84, and therefore the sweep-out of the smear by means of transfer is unnecessary. The effect from the smear generated in other period is still remained. The driving method in this case is different from the method in the first embodiment, in that a sweep pulse is impressed on a gate 89, instead of the charge being swept out by using the high-speed sweep pulse 17 as in the embodiment of Figure 7, and it is the same with that of the first preferred embodiment in other respects. That is, the bias voltage to the substrate is made higher from 8 volts to 15 volts at a time when charges are transferred to the charge storage area 88 from the V-CCD 82 to improve the effect of the remaining smear. According to the present second embodiment, the accumulation of the smear charge at the time of the impression of the high-speed sweep pulse is eliminated, and accordingly the phenomenon of the smear being doubled is also eliminated. In the present embodiment, therefore, the tendency of the smear occurring still on the lower side of a reproduced image as shown in Figure 5-(b), which is the case with the first preferred embodiment, is mitigated. The effect of reduction of the smear is further increased by stopping the impression of the sweep pulse on the gate 89 just before a charge of a photodiode 81 is read out to V-CCD 82 in the blanking period.

Although the pulse is impressed on the substrate only when the high-speed normal transfer pulse is impressed, in each of the above-described embodiments, the pulse may be impressed further on the substrate within the blanking period as well.

## Claims

1. A driving method of a solid-state imaging device having an imaging area, a charge storage area and a horizontal CCD shift register on a single semiconductor chip and having a vertical overflow drain structure wherein a pulse widening a depletion layer into a substrate is impressed on the substrate in a period, at least, when a signal charge is transferred from said imaging area to said charge storage area.

2. A driving method of a solid-state imaging device as claimed in claim 1, wherein said imaging area has a plurality of lines of photo-diodes, a plurality of first vertical CCD shift register each of which is disposed in adjacent to and along each of said photo-diode line, said charge storage area being formed of a plurality of second vertical CCD shift registers, and charges accumulated in said photo-diodes being transferred to said first vertical CCD shift registers and then to said second vertical CCD shift registers.

3. A driving method of a solid-state imaging device as claimed in claim 2, wherein said semiconductor chip has a substrate of one conductivity type having a main surface region in which another conductivity type layer is formed to form said vertical overflow drain structure, said imaging area, said charge storage area and said horizontal CCD shift register being formed in a surface portion of said other conductivity type layer.

4. A driving method of a solid-state imaging device as claimed in claim 3, wherein said pulse is exclusively applied at a time when charges are transferred from said first vertical CCD shift registers to said second vertical CCD shift registers.

5. A driving method of a solid-state imaging device as claimed in claim 3, wherein said pulse is applied at a time when charges accumulated in said photo-diodes are transferred to said first vertical CCD shift registers and at a time when said charges transferred to said first vertical CCD shift registers are transferred to said second vertical CCD shift registers.

FIG.1
(PRIOR ART)

FIG.2a

FIG.2b
(PRIOR ART)

FIG.3 (PRIOR ART)

FIG.4

light ①  light ②

light intensity

accumulation time  shutter time

FIG.5a

FIG.5b

61  62

61  62

smear value

0.7

0

A(V)          B(V)
8(V)  Vsub → 15(V)

FIG.6

11    field

12 signal output period

blanking period

(a)

15  16                    17  15  16
13  15

(b)

15  16        14        15      17  15  16

(c) B(V)
    A(V)
18              19              18

FIG.7

FIG. 8

| | **DOCUMENTS CONSIDERED TO BE RELEVANT** | | EP 89113798.6 |
|---|---|---|---|

| Category | Citation of document with indication, where appropriate, of relevant passages | Relevant to claim | CLASSIFICATION OF THE APPLICATION (Int. Cl.) 5 |
|---|---|---|---|
| A | US - A - 4 040 092 (CARNES)<br>* Fig. 4; column 4, lines 13-30; claims 1,2; abstract * | 1-3 | H 04 N 5/217<br>H 04 N 5/335 |
| P,A | EP - A1 - 0 295 977 (THOMSON-CSF)<br>* Abstract; column 1, lines 4-14; fig. 3a-5; column 4, line 31 - column 5, line 28 * | 1-3 | |
| A | US - A - 4 032 976 (LEVINE)<br>* Abstract; fig. 5; column 3, line 53 - column 4, line 42 * | 1 | |
| P,A | GB - A - 2 200 509 (SONY)<br>* Fig. 2; page 5, line 10 - page 7, line 14 * | 1,2 | |

| | | | TECHNICAL FIELDS SEARCHED (Int. Cl.) 5 |
|---|---|---|---|
| | | | H 04 N 3/00<br>H 04 N 5/00 |

The present search report has been drawn up for all claims

| Place of search | Date of completion of the search | Examiner |
|---|---|---|
| VIENNA | 17-10-1989 | BENISCHKA |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03 82